# EUROPEAN PATENT SPECIFICATION

(11) **EP 2 117 327 B1**
(45) Date of publication and mention of the grant of the patent: **01.11.2017**
(21) Application number: 07825703.7
(22) Date of filing: 12.11.2007
(51) Int. Cl.: A23C 3/03, A23C 9/123, A23C 19/05, A23C 19/097, A23C 19/032

(54) **METHOD FOR PREPARING A MILK FOR MILK-DAIRY APPLICATIONS, THE MILK OBTAINED BY SAID METHOD AND THE USES THEREOF**
VERFAHREN ZUR HERSTELLUNG EINER MILCH FÜR MOLKEREIANWENDUNGEN, NACH DIESEM VERFAHREN ERHALTENE MILCH UND IHRE VERWENDUNG
PROCÉDÉ DE PRÉPARATION D'UN LAIT POUR DES APPLICATIONS DE PRODUITS LAITIERS, LAIT OBTENU PAR LEDIT PROCÉDÉ ET SES UTILISATIONS

(30) Priority: 20.12.2006 IT MI20062451
(43) Date of publication of application: 18.11.2009
(73) Proprietor: Mofin S.R.L., 28100 Novara (IT)
(72) Inventor: MOGNA, Giovanni, I-28100 Novara (IT)
(74) Representative: Hoffmann Eitle
(86) International application number: PCT/IB2007/003555
(87) International publication number: WO 2008/084289

(56) References cited:
- EP-A- 1 142 481
- WO-A-02/43503
- WO-A-2004/052112
- HADLAND, G.: "Cold-ripening as a means of reducing the adverse effects of heating and cool-aging on the rennet-coagulation of milk." INTERNATIONAL DAIRY CONGRESS (18TH, SYDNEY), vol. 1E, 1970, XP008090038
- DATABASE WPI Week 199427 Derwent Publications Ltd., London, GB; AN 1994-224520 XP002474534 & SU 1 813 394 A1 (E SIBE TECH INST) 7 May 1993 (1993-05-07)
- CALVO M: "Rennet-clotting properties and starter activity on milk acidified with carbon dioxide" JOURNAL OF FOOD PROTECTION, DES MOINES, IO, US, vol. 56, no. 12, December 1993 (1993-12), pages 1073-1076, XP002095367 ISSN: 0362-028X
- MÉNARD, O. ET AL.: "Effect of heat treatment at alkaline pH on the rennet coagulation properties of skim milk" LAIT, vol. 85, no. 6, 2005, pages 515-526, XP002474533
- VARGAS M ET AL: "Stimulatory effect of shiitake mushroom extract on curd formation of acid milk by lactic acid fermentation" ANIMAL SCIENCE AND TECHNOLOGY, JAPANESE SOCIETY OF ZOOTECHNICAL SCIENCE, TOKYO, JP, vol. 67, no. 12, 1996, pages 1090-1094, XP003013267 ISSN: 0918-2365

## Description

The present invention relates to a method, called Mofinazione process, for preparing a milk intended for milk-dairy applications, the milk obtained with said method and the uses thereof. Said method includes an opportune heat treatment of the milk, followed by a pre-maturation concerning the addition and the development within said milk of opportune bacterial strains selected for this purpose, in particular strains with a probiotic valence.

It is known that the clotting is the base of the caseation process which leads to the formation of cheese, yoghurt and other dairy products.

The clotting phenomenon consists of a structural modification of the casein micelles which join together to form aggregates due to the action of the heat, the acidification and, as a consequence, of an enzymatic action.

The milk clotting due to the thermal heating is mainly due to the denaturation of the serum proteins which aggregate together and successively complex with the casein forming co-precipitates at temperatures above 70°C.

On the contrary, the acid clotting is due to the aggregation of the casein micelles because of the loss of calcium phosphate from the micelles themselves; the lowering of the pH for the concentration increase of acids within the milk causes the protonation/neutralization of the negatively charged casein functions. This causes a decrease of the zeta potential (a determinant parameter for the stability of the dispersed systems and defined as the electric potential value recordable at the surface of the double electric layer which usually is around any particles dispersed in a liquid) which, in turn, increases the solubilization of the calcium salts.

Such phenomenon induces a progressive passage of calcium from the calcium phosphocaseinate of the casein micelle to the aqueous matrix of the milk.

At pH values between 5.7 and 5.8, 50% of the colloidal calcium is passed in solution, while at a pH = 4.6 (isoelectric point of the casein) the demineralisation of the casein is complete and therefore the destabilization of the casein micelles, which aggregate leading to the clot formation, is the greatest.

The enzymatic coagulation of the milk takes place through the addition of substances, generally defined as "milk coagulants" capable of exerting a hydrolytic action on the casein k, with a relative destabilization of the casein micelles, which promotes the aggregation of the micelles themselves to give the formation of a gel defined "curd".

The curd maturation is operated by:
- coagulating enzymes;
- enzymes produced by lactic bacteria used during the processing;
- residual enzymes typical of the fresh milk;
- enzymes produced by microorganisms contaminating the milk.

Said maturation generally determines the structural and organoleptic characteristics of the different cheeses ready to use.

These latter represent an uncontrolled variable and, so far, an uncontrollable variable both for the number and the typology.

Such enzymatic complement resulting from bacterial flora contaminating the milk can affect in an absolutely negative way the organoleptic characteristics of the different cheeses produced.

The enzymatic clotting can also be defined as "rennet" clotting, as from time immemorial in the caseation process it is used the "rennet" or curd, which is an enzymatic preparation of animal origin constituted by the natural extract of the bovine, ovine and goat abomasum, prepared according to traditional known methods. The main coagulating enzymes existing in the rennet are rennin and pepsin.

The rennet clotting certainly is the more used typology for the manufacturing of cheeses all over the world.

The coagulating effect of the enzymes can schematically be divided in three successive steps: the first step consists of the enzyme attack on the micellar casein with hydrolysis of the phenylalanine-methionine bond (in the 105-106 position of the primary structure of the casein k) and leads to the detachment of a strongly hydrophilic casein-glycopeptide; the second step consists of the formation of hydrophobic bonds and calcium-phosphate salt bridges between the destabilized casein micelles. In fact, the casein molecules no more protected by the glycopeptide mutually hurt themselves and, thanks to the calcium existing in a ionic form within the milk, they start to bind to each other by producing the flocculation phenomenon; the third step follows the flocculation and consists of a reinforcement of the casein network through the formation of an always increasing number of bonds of a different nature.

Within the casein matrix, which constitutes the support structure of the caseous gel, the serous part remains entrapped.

During the third step, the gel becomes always thicker following to the increase of intermicellar bonds; micelles approach to each other and the clot is contracted causing the expulsion of the serum. This phenomenon, also known as draining or syneresis, is accelerated by the cut of the curd, the increase of the temperature and the increase of the acidity (with a relative lowering of the pH) produced by lactic bacteria which, by developing themselves, rapidly transform the lactose in lactic acid. Only the first two steps above described determine the real clotting, namely the passage of the casein from the colloidal suspension state to the gel state, while the third step essentially consists of the gelation of all the mass of milk and the start of proteolytic phenomena not specific in other sites of the casein k and on caseins αₛ and β.

The rate and the course of the flocculation and the following gelation affect in a determining extent the rheological characteristics of the curd with reference to elasticity, texture, permeability and contractility of the clot and consequently to the syneresis capability of the serum.

Several factors affect the steps above described, in particular the first two steps.

The length of the first step (also called "flocculation time") depends on the temperature, which must be, within reasonable limits, close to the optimal one for the catalytic effectiveness of the enzyme; the concentration of the total enzyme, calcium and phosphorous; the free acidity values (pH); the tertiary and quaternary structure of the casein (which can facilitate or block the enzyme access to the attack sites).

The features of the second step (gelation) mainly depend on the protein and casein concentration, the concentration of the free calcium and phosphate ions; the free acidity (namely, the pH) and the temperature which increases the reactions rate.

The development of these two steps can be followed and evaluated by means of an equipment called lactodynamograph, thanks to which the flocculation (or "setting") time corresponding to the first step and the extent of the gelation corresponding to the second step can be measured.

It is therefore possible to establish in advance if the characteristics of the milk under examination are such to make it suitable to the caseation. Said lactodynamograph thus allows to determine the clotting time and the consistency of the clot of milk. Information relating to such technique are provided, for example, in the "Trattato di tecnologia casearia" by Ottavio Salvadori del Prato, Ed. Agricole, 1998, pages 203-205.

The aptitude of the milk to the rennet clotting, that is its reactivity towards the rennet, therefore constitutes, together with its fermentative aptitude, namely the tendency to the growth of lactic bacteria, a fundamental parameter for a correct and optimal dairy transformation.

The bonification heat treatment to which the milk must necessarily be subjected before its industrial use, is a particularly delicate factor. In fact, if conducted at too high temperatures and/or for excessively long times, said treatment remarkably reduces the aptitude to the milk clotting and, consequently, the quality of dairy products resulting thereof.

Said bonification heat treatment of the milk is usually carried out through pasteurization or sterilization.

According to what is usually known, the pasteurization is a thermal bonification treatment with the main purpose of eliminating the pathogenic microorganisms existing in the milk, as well as greatly reducing a great part of the remaining microbial flora, such as yeasts, coliforms and generally so-called "anti-dairy" microorganisms, as they are responsible of structural and/or organoleptic defects of the milk-dairy products obtained from said milk.

Actually, in the last years it has been found that some pathogenic microbial species, such as for example certain strains of the genus *Listeria,* are capable of surviving to said treatment.

In some cases, milk-dairy derivatives strongly contaminated by *Listeria monocytogenes,* still existing after traditional pasteurization of the milk, have determined mortality events in the consumers.

Usually, the pasteurization consists of heating the milk at a temperature below its boiling point for an opportune time. The pasteurized milk can be intended both for the human diet and the dairy transformation; the one for a food use usually has a shelf life of 6 days under refrigerated conditions.

Typically, said pasteurization includes the following steps:
- pre-heating step, at a temperature between 40°C and 45°C;
- homogenization step, wherein the milk is exited from a high-pressure nozzle (150-200 bar) thus breaking fat clots and eliminating the tendency to the surface cream formation;
- degassing step, wherein the air bubbles are removed bringing the milk at 45° under a partial vacuum;
- real pasteurization step, which can be of two kinds: low and slow, or high and quick; in the first case, the milk is brought at a temperature of 63°C for about 30 min, in the second case at a temperature between 72°C to 75°C for 10-20 seconds;
- cooling step, until a temperature depending on the technological process.

The sterilization, on the contrary, is a process capable of destroying any microbial forms, vegetative or in form of spore, as well as the viral forms, among which the bacteriophages.

Said process is used when it is necessary to store the milk for 3-6 months at room temperature.

The most commonly used technological process is the UHT (Ultra High Temperature), conducted at 140-144°C for 2-4 seconds.

The sterilization, because of the high temperatures reached by the milk during the process, causes the alteration of some components thereof, in particular proteins and sugars, by compromising, in each case, its natural clotting aptitude.

In conclusion, the purification of milks intended for dairy transformation is now exclusively carried out through pasteurization of a traditional type (at a temperature between 72°C and 75°C for 10-20 seconds), the only treatment suitable for the maintenance of the natural clotting aptitude of the fresh milk.

However, the same is not able to reduce the load (quantity) of the bacterial sporing strains (for example some species of the genus *Clostridium* and/or Ba*cillus*) at acceptable residual levels, as well as the non-sporing thermoduric microorganisms (for example, some species of the genus *Micrococcus, Mycobacterium, Enterococcus, Streptococcus* and *Pediococcus*) originally existing within the milk.

The substantial persistence of the "antidairy" strains above mentioned in the milk intended for milk-dairy applications (also after purification through traditional pasteurization) gives rise to a reduced quality of the end dairy products (for example, due to swelling phenomena of the cheese and, generally, to qualitative-quantitative alterations of the fermentation/maturation kinetics which compromise the organoleptic peculiarities of the products themselves). Furthermore, under the above pasteurization conditions it is also noted the non-elimination of the phages (with a particular reference to those specific of the lactic bacteria). Said problem can compromise the growth of the microbial cultures used within the dairy processing (selected starters, natural lacto- or serum-grafts), with serious technological problems and unacceptable economic losses.

Furthermore, as above mentioned, the non-complete elimination of the pathogenic agents, such as some species of *Listeria,* above all the species *Listeria monocytogenes*, can represent a serious sanitary problem, making the product no more suitable for the consumption.

Concerning this, it is worthwhile to point out that said pathogenic species have improved, in the course of the years, the own capability of withstanding to the traditional pasteurization conditions usually employed (72°C-75°C, for 10-20 seconds). Because of this phenomenon, due to the natural and evolutionary selection of the species, with the above traditional pasteurization it is no more possible to ensure the desired elimination (or reduction below an acceptable threshold) of said pathogens.

Moreover, it is known that, in addition to the progressive worsening of the hygienic-microbiological qualities of the milk and the products resulting therefrom because of the development of potentially pathogenic microbial species above described, an additional problem is represented by the thermoresistant toxins produced from pathogenic microorganisms possibly contaminating the milk, and by the presence of enzymes still active after the traditional pasteurization step.

Said enzymes can be both of an endogenous nature, intrinsic of the milk composition, and of which one of the most representative is the alkaline phosphatase, and of a bacterial nature.

The scientific article in the name of G. Hadland et.; having title "Cold-ripening as a means of reducing the adverse effects of heating and cool-aging on the rennet-coagulation of milk", Diary Research Institute, The Agricultural College, Vollebekk, Norway, discloses a method wherein samples of milk were stored at 4-5°C. Prior to the cool storage, 0.25-1.0% of normal dairy starter was added to the samples.

The patent application WO2004/052112 A1 discloses a method wherein strains are added to the milk delivered to the cheese factory at the time of storage; the stored milk is normally processed during the subsequent 24 hours, for example to be pasteurized.

The patent application WO2002/43503 A1 discloses a method wherein milk is pasteurized, for example, at 88°C for 30 minutes or at 95°C for about 38 seconds. The heat treated milk is cooled to incubation temperature (40-46°C) and subjected to fermentation with lactic acid bacteria.

The patent application EP 1142481 A1 discloses a method wherein milk is pasteurized at 90°C for 1 minute. The pasteurized milk was cooled down to room temperature, inoculated with *Lactobacillus helveticus* CM4, and stirred to make a mixture.

The article found in the database WPI Week 1994227 Derwent Publications Ltd., London GB; AN 1994-224520 XP002474534 & SU 1813394 A1 (Sibe Tech Inst) 7 May 1993, discloses a method which comprises pasteurisation of skim milk, cooling, introduction of souring agent *L. acidophilus,* souring to produce a coagulate and cooling, to improve the quality and reduce coagulation time. To improve the quality, skim milk is mixed with cheese whey, before pasteurisation.

The scientific article in the name of Calvo M. et al.; having title "Rennet-clotting properties and starter activity on milk acidified with carbon dioxide" JOURNAL OF FOOD PROTECTION, DES MOINES, IO, US, vol.56, no. 12, December 1993, pages 1073-1076, discloses a method wherein milk is acidified using carbon dioxide and heated at 60 or 70 °C for 30 minutes, followed by the addition of bacteria strains.

The typical time/temperature combination of a traditional pasteurization is not capable of bringing the residual total enzymatic activity below an acceptable threshold for the purposes of a good dairy transformation and, therefore, of the quality of the milk-dairy products obtained. Therefore, it would be useful being able to provide a milk intended for dairy applications which is substantially free of undesired and disadvantageous or harmful contaminating substances.

In particular, there remains the need of providing a milk intended for dairy applications, in which the residual quantity of phages, unfavourable enzymatic activities, thermoduric microorganisms, pathogenic agents and their toxins, often present within the raw milk, is substantially null (or at least below a value considered acceptable from the sanitary and industrial point of views), without qualitatively-quantitatively altering (in a negative sense) the tendency of said milk to the clotting.

It is an object of the present invention to provide an adequate answer to the need above pointed out.

This and other aims, which will result apparent from the following detailed description, have been attained by the Applicant according to claim 1. The Applicant has unexpectedly found that, by subjecting the milk intended for dairy applications to a heat treatment at a particular, proper temperature, followed by the addition and successive development (pre-maturation), within said treated milk, of an effective quantity of at least one properly selected bacterial strain, it is possible to obtain a milk substantially free of the undesired contaminating substances above described and which preserves the original tendency to the clotting.

Another object of the present invention is a method for producing a milk suitable for dairy applications, as reported in the appended independent claim.

A further object of the present invention is the milk obtainable through the method of the present invention.

Another object of the present invention is then the use of said milk above mentioned in the dairy sector.

Preferred embodiments of the present invention are reported in the appended dependent claims.

Features and advantages of the present invention are pointed out in detail in the following description; furthermore, they are also shown, by way of example, in the enclosed **Table 1,** in which:
Table 1 shows the thromboelastogram of:
   1- a reference milk, thermally treated at 72°C for 40 seconds (that is, under conditions of a traditional pasteurization);
   2- the same milk thermally treated at 82.5°C for 40 seconds, without pre-maturation (comparative)
   3- the same milk thermally treated at 82.5°C for 40 seconds and, successively, pre-matured with the bacterial strain LMG-P-21385 through incubation at a temperature of 9°C for 18 hours (comparative);
   4- the same milk, previously maintained under refrigerated conditions at 4°C for 4 days, thermally treated at 72°C for 40 seconds;
   5- the same milk, previously maintained under refrigerated conditions at 4°C for 4 days, thermally treated at 82.5°C for 40 seconds, without pre-maturation (comparative);
   6- the same milk, previously maintained under refrigerated conditions at 4°C for 4 days, thermally treated 5 at 87.5°C for 40 seconds and, successively, pre-matured with the bacterial strain LMG-P-21385 through incubation at a temperature of 9°C for 18 hours.

The Applicant has completely unexpectedly found that, by subjecting a milk intended for dairy applications for an opportune time interval to a heat treatment at a temperature between 83 and 90°C, followed by the addition and the development (pre-maturation), within said thermally treated milk, of an effective quantity of at least a proper physiologically compatible bacterial strain, it is possible to obtain a milk which maintains unaltered its original tendency to clotting and that, in the meantime, it is substantially free of undesired contaminating agents (above described). Said pollutants, on the contrary, are still present, in a different extent, in the milk pasteurized according to conventional techniques known to the skilled in the art.

The method according to claim 1 for the preparation of a milk intended for dairy applications, includes at least a step a) (called heat treatment), in which the starting milk is subjected to a heat treatment up to a temperature between 83 and 90°C for a time between 20 and 60 seconds. In a preferred embodiment, said temperature is about 85 °C and the time of the heat treatment is 40 seconds. Said step a) includes:
- heating said milk until a temperature preferably between 83°C and 90°C (more preferably of about 85°C), for a time preferably between 20 seconds and 1 minute (more preferably, about 40 seconds);
- cooling the milk thus thermally treated at a temperature between 1°C and 15°C, preferably between 3 and 12°C, however as a function of the treatment conditions of the subsequent step.

The method of the present invention further includes at least a step b) (called pre-maturation step), in which the thermally treated milk resulting from the step a) is additioned with an effective quantity of at least a physiologically compatible microbial strain, followed by the development, in opportune conditions within said milk, of the additioned microbial strain.

Advantageously, said development of at least one microbial strain allows to restore the original tendency to the clotting of the milk itself thanks to the production and the catalytic activity of specific enzymes produced by the additioned strains.

In the method according to claim 1, said strain is selected from the group consisting of: *Lactobacillus plantarum* LMG-P-21385 deposited on 01.31.2002, *Lactococcus lactis* subsp. *lactis* LMG-P-21387 deposited on 03.15.2002, *Lactococcus lactis* subsp. *lactis* LMG-P-21388 deposited on 01.31.2002 and *Lactobacillus plantarum* LMG-P-21389 deposited on 03.15.2002 (all c/o the BCCM/LMG Bacteria Collection of Gent, Belgium) and mixtures thereof.

The acronyms relating to the strains above shown refer to the access number of the relative deposits carried out by the Firm MOFIN S.r.l., Via Pietro Cu-stodi, 12, Novara, in accordance with the Budapest Treaty on the international acknowledgement of the microorganisms deposit of the 28.04.1977.

The strains belonging to the genus *Lactobacillus,* species *plantarum* (with the deposit numbers LMG-P-21385 and LMG-P-21389) are characterized by:
isolation: from human fecal samples with methods known to the skilled in the art;
growth in a MRS culture broth (DIFCO, ref. 288130) at 30°C;
they are in form of single, short-chained, short rods; they grow well at 30°C; they do not generate spores; gram-positive; facultative heterofermentings;
at temperatures higher than 70°C, said strains are inactivated; therefore, when subjected to traditional pasteurization conditions, their complete degradation occurs.

Strains belonging to the genus *Lactococcus,* species *lactis* (having deposit numbers LMG-P-21387 and LMG-P-21388), are characterized by:
isolation: from samples of cow's milk pre-heated at 25°C for 15 minutes, with following isolations according to what usually foreseen by the know technique of the sector;
growth in milk at 30°C overnight (possibility of growing also in culture broth M17 at 30°C);
they are in form of elongated ovoidal cells with a diameter between 0.5 and 1 µm; doublet or short-chained growth; they do not generate spores; gram-positive; microaerophilic; final pH, after growth in broth having glucose as a carbon source, between 4.0 and 4.5; obliged omofermentings; they form lactic acid starting from glucose, galactose, maltose and lactose and, in a lower extent, also from other sugars;
at temperatures higher than 70°C they are inactivated, therefore, when subjected to the conditions of a traditional pasteurization, their complete degradation occurs.

Such strains can be used alone or in admixture therebetween in a varying mutual ratio as a function of the strain combinations.

In one of the preferred embodiments of the present invention, the mixture consists of the following strains: LMG-P-21385 in a quantity between 10% and 40%; LMG-P-21387 in a quantity between 10% and 40%; LMG-P-21388 in a quantity between 10% and 40%; LMG-P-21389 in a quantity between 10% and 40%.

In the step b), said at least one bacterial strain (or mixture of bacterial strains) is added to the milk resulting from step a) in the more opportune physical form, selected from liquid, anhydrous or frozen, depending on the type of milk and/or the type of microorganism/s employed.

Preferably, it is sufficient to add very low quantities of the above strains to the thermally treated milk resulting from a).

Independently of the physical form of the culture used, the quantity added to the milk is such to obtain a concentration between 10⁴ and 10⁹ CFU/ml of milk. Preferably, said concentration is between 10⁵ and 10⁸ CFU/ml of milk; particularly preferred, between 10⁶ and 10⁷ CFU/ml of milk.

Usually, after the addition of at least one microbial strain according to the invention to a milk resulting from a), there is the development of said strain in the milk in opportune conditions.

Preferably, said development takes place at temperatures between 1 and 15°C, preferably from 6 to 12°C, for time ≥ 1 hour, preferably between 4 and 48 hours, more preferably from 8 to 30 hours; particularly preferred, between 12 and 24 hours.

For example, said development is conducted at a milk temperature of 9°C for a time of 18 hours. The preparation method of the milk for a dairy use according to the present invention includes, therefore, the following steps:
a) subjecting the milk to a heat treatment at the temperature and for the time according to claim 1;
b) adding and developing in suitable conditions,
within the milk resulting from step a), a quantity, according to claim 1, of at least one bacterial strain selected from those according to claim 1. The milk obtained with the method according to the present invention above described has proved to have the same typical original tendency to the clotting.

Accordingly, with the addition and the following development of at least one bacterial strain, selected from those above described, in the milk after the heat treatment of the same, according to step a), it was unexpectedly possible to completely restore the normal tendency to the clotting of the milk itself, without altering the normal clotting parameters of the initial milk.

Therefore, an object of the present invention is also the use of said strains above mentioned for restoring
the coagulative tendency of a milk thermally treated under the conditions above described.

Furthermore, said milk has proved to be substantially free of the undesired contaminating agents above shown.

In particular, it has been shown that the milk obtained with the method of the present invention has a significant lowering of the *Listeria monocytogenes* in its thermoresistant variant, with respect to what usually occurs by means of a traditional pasteurization. As for the phages problem, it has also been shown that said heat treatment completely eliminates the same, thus avoiding the serious technological problems during the dairy transformation.

A further and unexpected advantageous aspect of the milk obtained according to the method of the present invention is the remarkable activity reduction of the enzymes naturally existing within said milk and/or liberated from the lactic flora cells after its degradation during the thermization.

The heat treatment of a milk according to the present invention, in fact, is able to irreversibly denature most of the enzymes and toxins initially existing within said milk. The milk, when the heat treatment and pre-maturation steps (Mofinazione process) are ended, can be simply heated at the temperature of the dairy processing, thus maintaining the probiotic valences, if any, or being subjected to a mild heat treatment, such to inactivate the bacterial forms used in the pre-maturation process.

The quality of the dairy food products obtained from the same results considerably improved, being said milk substantially free of the undesired residual contaminating agents which, on the contrary, are still existing within the milk pasteurized with traditional methods.

The Mofinazione process, besides the advantages above described, further ensures a better yield in the caseation as it allows to combine within the curd the serum proteins denatured by the heat effect. In other words, the present invention ensures a greater yield of the cheese, with consequent incontrovertible advantages of economic nature.

Therefore, an object of the present invention is also the milk intended for milk-dairy applications obtainable with the method of the invention above described. Advantageously, also the food products resulting from the caseation of said milk are substantially free of the undesired contaminating and/or pathogenic residual agents above mentioned. Consequently, said products are differentiated from the known ones because of the lack of defects and for the best sanitary characteristics.

Another extremely advantageous aspect is that two of the particularly preferred strains of the invention (*Lactobacillus plantarum* LMG-P-21385 and *Lactobacillus plantarum* LMG-P-21389) belong to the species Lactoba*cillus plantarum,* a typology with remarkable probiotic properties.

The pre-maturation operated with said microorganisms imparts, in this way, a probiotic valence to the milk itself and, accordingly, also to the cheese produced therefrom.

Analytical investigations carried out by the Applicant have pointed out the presence of specific peptides both within the pre-matured milk having the two aforesaid strains and within the cheeses obtained therefrom; waiting for additional investigations, it is believed that such peptides are bioactive and that part of the probiotic activities of the two strains of *L. plantarum* may be due to the same.

Therefore, also the dairy food products, in particular yoghurt and/or cheeses, obtainable from the milk intended for milk-dairy applications according to the present invention form another object of the present invention.

The following experimental part shows, by way of absolutely not limiting example, the clotting tendency of milk samples obtained with the method of the present invention, in comparison with that of a milk treated in a traditional way, and the reduction of the catalytic activity of an enzyme naturally existing in the milk in high concentrations, the alkaline phosphatase, following to different heat treatment conditions of the milk itself.

### Example 1- Evaluation of the clotting tendency of the milk.

In order to check the clotting tendency of the milk obtained according to the present invention, clotting tests on milk samples pasteurized at 72°C with a traditional pasteurization method and on milk samples thermally treated according to the method of the present invention, respectively at 82.5°C and 87.5°C, have been carried out. Said samples have not been additioned with any microorganisms before the determination of their clotting tendency.

In parallel, the same clotting tests have been carried out on samples similar to those above mentioned, but pre-matured with the bacterial strain LMG-P-21385 before being subjected to the evaluation of the clotting tendency.

The thromboelastograms recording of the samples above mentioned has been carried out with a lactodynamograph FOSS Italia under the following experimental conditions:
- temperature 32°C;
- substrate of cow's milk having pH = 6.75;
- calf liquid rennet having a titer equal to 1:4000 (80% rennin and 20% pepsin), additioned in an extent of 23 µl per 10 ml of milk (0.23%, v/v);
- within the samples additioned with the bacterial strain above shown, said addition has been carried out starting from a liquid culture in an extent of the 0.5% (volume/volume, v/v) and the resulting mixture has been maintained for 18 hours at 9°C for the development of said strain before the thromboelastogram recording.

The adopted procedure was the following:
to a volume of milk of the samples above mentioned (both those without addition of the microorganism and
those previously additioned with the mentioned microorganism), heated at 32°C, an effective quantity of rennet (23 µl per 10 ml of milk, that is 0.23% in v/v) has been added for inducing the clotting thereof. The milk-containing wells were supported on a movable base, which performs a very slow circular movement.

The nib dipped within the milk does not encounter, at the beginning, a large friction and it remains still, then, after the progress of the clotting, it brings the nib, which follows in this way the movement of the movable base.

Resulting thromboelastograms are those reported in the enclosed Table 1. The most important parameter for evaluating an optimal tendency to the clotting of a milk, for the purposes of a correct caseation, is the one identified as K20, which shows the required time, starting from the beginning of the clotting process, for obtaining such a mechanical resistance of the clot to induce a total displacement of the nib of 20 mm. The parameter K20 is therefore strictly connected with the rheological characteristics of the rennet.

High values of K20 are indicative of a less thick clot, namely a poor tendency of the milk to clotting in the times required for obtaining a milk-dairy product of a good quality.

Values of pH and parameter K20 of six milk samples, whose thromboelastograms are reported in the table 1, are presented in the following Table 1.

In particular, the first three thromboelastograms have been obtained from fresh milk samples, while the last three have been recorded starting from milk samples stored under refrigerated conditions for 4 days.

**TABLE 1**

| sample | pH | K20 |
|---|---|---|
| pasteurized milk at 72°C for 40 seconds (according to the state of the art) | 6.68 | 6.02 |
| thermized milk at 82.5°C for 40 seconds, without pre-maturation (comparative) | 6.68 | 16.46 |
| thermized milk at 82.5°C for 40 seconds and pre-matured with LMG-P-21385 (Comparative process) | 6.68 | 6.48 |
| pasteurized milk at 72°C for 40 seconds (according to the state of the art) | 6.74 | 11.40 |
| thermized milk at 87.5°C for 40 seconds, without pre-maturation (comparative) | 6.73 | 21.09 |
| thermized milk at 87.5°C for 40 seconds and pre-matured with LMG-P-21385 (Mofi- nazione process) | 6.73 | 11.50 |

As it is apparent from table 1, milk samples after
heat treatment at 82.5°C or 87.5°C show K20 values at least 2-2.5 times longer than the values typical of the milk pasteurized according to the conventional process.

On the contrary, milk samples thermized under the same
conditions, and successively pre-matured with the strain LMG-P-21385, according to the invention, have shown to have absolutely comparable K20 values with those of the milk pasteurized according to the conventional procedure.

Therefore, it is unexpectedly shown that the addition and the development of said microorganism in milk thermized according to the method of the present invention has allowed to restore the original tendency to the milk clotting.

Example 2 - Evaluation of the residual catalytic activity of the alkaline phosphatase in the milk.

The alkaline phosphatase is an enzyme naturally existing within the raw milk; moreover, it is liberated following to the thermal degradation of almost all the microbial species existing in said milk.

Said enzyme, like all the protein molecules, is denatured under high temperatures conditions, therefore it is a valid indicator both of the entity of the thermal treatment undergone by a milk (time/temperature combination) and of the level of residual enzymatic activities in the milk after the heat treatment itself.

In order to quantify the residual activity of the enzyme, an international method (FIL IDF 155A:199) has been carried out, based on a continuous fluorometric procedure which uses, as a substrate, a non-fluorescent aromatic monophosphoric ester which, in the presence of the alkaline phosphatase, undergoes a hydrolysis reaction by producing a highly fluorescent molecule.

In the table 2 below there are reported the values of a residual phosphatase activity (in milliunits of enzyme/liter, mU/l) existing in a milk pasteurized according to the traditional procedure and in a milk thermized at 85°C for 40 seconds.

**TABLE 2**

| **sample** | **phosphatase** |
|---|---|
| milk pasteurized at 72°C for 20 seconds | 250 mU/l |
| milk thermized at 85°C for 40 sec. | 25 mU/l |

As shown by data of table 2, the residual phosphatase activity in a thermally treated milk according to the method of the present invention is equal to about a tenth of the typical residual activity of a milk pasteurized at 72°C for 20 seconds.

The data shows how the method of the present invention is capable of remarkably reducing the concentration of active enzymes, also including those anti-dairy, if present, which originate defective and poor quality productions of the milk-dairy products resulting therefrom.

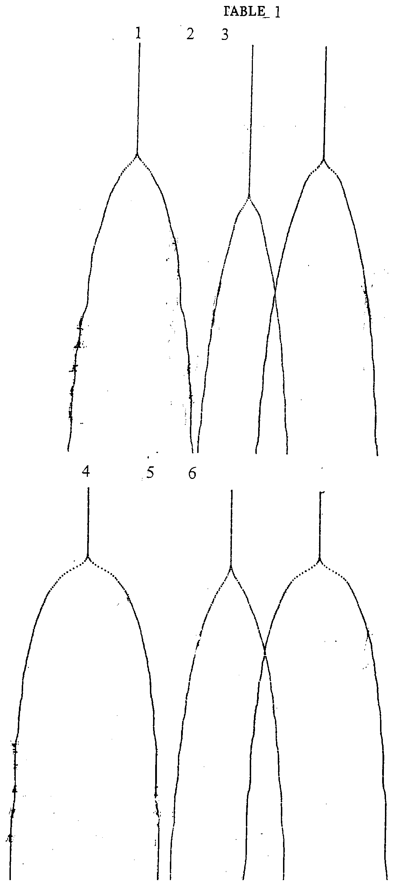

## Claims

1. A method for preparing a milk intended for milk-dairy applications, comprising:
- at least a step a) that includes:
i) heating a milk up to a temperature comprised between 83°C and 90°C, for a time comprised between 20 and 60 seconds,
ii) cooling the milk thus thermally treated at a temperature comprised between 1°C and 15°C; and
- at least a step b) for a pre-maturation of the milk resulting from step a), through the addition and the following development of an effective quantity of at least one bacterial strain capable of restoring the original clotting tendency of the starting milk, said at least one bacterial strain being selected from the group consisting of: *Lactobacillus plantarum* LMG-P-21385, *Lactococcus lactis subsp. lactis* LMG-P-21387, *Lactococcus lactis subsp. lactis* LMG-P-21388, *Lactobacillus plantarum* LMG-P-21389 and mixtures thereof.

2. The method according to claim 1, wherein the temperature is equal to about 85°C and the time is equal to 40 seconds.

3. The method according to claims 1 or 2, wherein it is employed a mixture consisting of the four strains *Lactobacillus plantarum* LMG-P-21385, *Lactococcus lactis subsp. lactis* LMG-P-21387, *Lactococcus lactis subsp. lactis* LMG-P-21388, *Lactobacillus plantarum* LMG-P- 21389; preferably said mixture consists of *Lactobacillus plantarum* LMG-P-21385 in a quantity between 10% and 40%, *Lactococcus lactis subsp. lactis* LMG-P-21387 in a quantity between 10% and 40%, *Lactococcus lactis subsp. lactis* LMG-P-21388 in a quantity between 10% and 40%, and *Lactobacillus plantarum* LMG-P-21389 in a quantity between 10% and 40%.

4. The method according to any one of the preceding claims, wherein said at least one strain is added in a liquid, anhydrous or frozen form, preferably a quantity of said strain is such to obtain a concentration in said milk between 10⁴ and 10⁹ CFU/ml of milk; preferably, between 10⁵ and 10⁸ CFU/ml; more preferably, from 10⁶ to 10⁷ CFU/ml.

5. The method according to any one of the preceding claims, wherein the development of said at least one bacterial strain takes place at a temperature between 1°C and 15°C, preferably from 6°C to 12°C, for a time between 4 hours and 48 hours, preferably from 8 hours to 30 hours, more preferably from 12 hours to 24 hours.

## Patentansprüche

1. Verfahren zur Zubereitung einer für Milchprodukt-Applikationen bestimmten Milch, umfassend:
- wenigstens einen Schritt a), der einschließt:
i) Aufheizen einer Milch auf eine Temperatur zwischen 83°C und 90°C während einer Zeit zwischen 20 und 60 Sekunden,
ii) Abkühlen der so thermisch behandelten Milch auf eine Temperatur zwischen 1°C und 15°C; und
- wenigstens einen Schritt b) zur Vorreifung der Milch aus Schritt a) durch die Zugabe und nachfolgende Entwicklung einer wirksamen Menge von wenigstens einem Bakterienstamm, der in der Lage ist, die ursprüngliche Gerinnungsneigung der Ausgangsmilch wiederherzustellen, wobei der wenigstens eine Bakterienstamm ausgewählt ist aus der Gruppe bestehend aus: *Lactobacillus plantarum* LMG-P-21385, *Lactococcus lactis subsp. lactis* LMG-P-21387, *Lactococcus lactis subsp. lactis* LMG-P-21388, *Lactobacillus plantarum* LMG-P-21389 und Mischungen davon.

2. Verfahren gemäß Anspruch 1, worin die Temperatur etwa 85°C und die Zeit 40 Sekunden beträgt.

3. Verfahren gemäß den Ansprüchen 1 oder 2, bei dem eine Mischung aus den vier Stämmen *Lactobacillus plantarum* LMG-P-21385, *Lactococcus lactis subsp. lactis* LMG-P-21387, *Lactococcus lactis subsp. lactis* LMG-P-21388, *Lactobacillus plantarum* LMG-P-21389 verwendet wird; wobei diese Mischung vorzugsweise aus *Lactobacillus plantarum* LMG-P-21385 in einer Menge zwischen 10% und 40%, *Lactococcus lactis subsp. lactis* LMG-P-21387 in einer Menge zwischen 10% und 40%, *Lactococcus lactis subsp. lactis* LMG-P-21388 in einer Menge zwischen 10% und 40% und *Lactobacillus plantarum* LMG-P-21389 in einer Menge zwischen 10% und 40% besteht.

4. Verfahren gemäß einem der vorhergehenden Ansprüche, wobei der wenigsten eine Stamm in flüssiger, wasserfreier oder gefrorener Form zugegeben wird und die Menge des Stamms vorzugsweise so beschaffen ist, dass eine Konzentration in der Milch zwischen 10⁴ und 10⁹ CFU/ml Milch; vorzugsweise zwischen 10⁵ und 10⁸ CFU/ml; stärker bevorzugt von 10⁶ bis 10⁷ CFU/ml erhalten wird.

5. Verfahren gemäß einem der vorhergehenden Ansprüche, wobei die Entwicklung des wenigstens einen Bakterienstamms bei einer Temperatur zwischen 1°C und 15°C, vorzugsweise von 6°C bis 12°C, während einer Zeit zwischen 4 Stunden und 48 Stunden, vorzugsweise 8 Stunden bis 30 Stunden, stärker bevorzugt 12 Stunden bis 24 Stunden, stattfindet.

## Revendications

1. Procédé de préparation d'un lait destiné à des applications de produits laitiers, comprenant :
- au moins une étape a) qui comprend :
i) le chauffage du lait à une température entre 83 °C et 90 °C, pendant une durée entre 20 et 60 secondes,
ii) le refroidissement du lait ainsi thermiquement traité à une température entre 1 °C et 15 °C ; et
- au moins une étape b) de pré-maturation du lait obtenu à l'étape a), par ajout et développement ultérieur d'une quantité efficace d'au moins une souche bactérienne capable de restaurer la tendance à la coagulation originale du lait de départ, ladite au moins une souche bactérienne étant choisie dans le groupe constitué par : *Lactobacillus plantarum* LMG-P-21385, *Lactococcus lactis* subsp. *lactis* LMG-P-21387, *Lactococcus lactis subsp. lactis* LMG-P-21388, *Lactobacillus plantarum* LMG-P-21389 et leurs mélanges.

2. Procédé selon la revendication 1, dans lequel la température est égale à environ 85 °C et la durée est égale à 40 secondes.

3. Procédé selon les revendications 1 ou 2, dans lequel un mélange constitué par les quatre souches *Lactobacillus plantarum* LMG-P-21385, *Lactococcus lactis subsp. lactis* LMG-P-21387, *Lactococcus lactis subsp. lactis* LMG-P-21388, *Lactobacillus plantarum* LMG-P-21389 est utilisé ; de préférence dans lequel ledit mélange est constitué par *Lactobacillus plantarum* LMG-P-21385 en une quantité entre 10 % et 40 %, *Lactococcus lactis subsp. lactis* LMG-P-21387 en une quantité entre 10 % et 40 %, *Lactococcus lactis* subsp. *lactis* LMG-P-21388 en une quantité entre 10 % et 40 %, et *Lactobacillus plantarum* LMG-P-21389 en une quantité entre 10 % et 40 %.

4. Procédé selon l'une quelconque des revendications précédentes, dans lequel ladite au moins une souche est ajoutée sous une forme liquide, anhydre ou congelée, de préférence une quantité de ladite souche est telle qu'elle permet d'obtenir une concentration dans ledit lait entre 10⁴ et 10⁹ CFU/ml de lait ; de préférence entre 10⁵ et 10⁸ CFU/ml ; de préférence encore de 10⁶ à 10⁷ CFU/ml.

5. Procédé selon l'une quelconque des revendications précédentes, dans lequel le développement de ladite au moins une souche bactérienne se produit à une température entre 1 °C et 15 °C, de préférence de 6 °C à 12 °C, pendant une durée entre 4 et 48 heures, de préférence de 8 à 30 heures, de préférence encore de 12 à 24 heures.
